# EUROPEAN PATENT APPLICATION

(11) **EP 0 957 598 A2**
(43) Date of publication of application: **17.11.1999**
(21) Application number: 99108815.4
(22) Date of filing: 04.05.1999
(51) Int. Cl.: H04H 1/00

(54) **Broadcasting transmitter and receiver**

(30) Priority: 11.05.1998 JP 12764298
(71) Applicant: Matsushita Electric Industrial Co., Ltd., Kadoma-shi, Osaka 571-8501 (JP)
(72) Inventor: Nishi, Hiroyuki, Toyko 168-0065 (JP)
(74) Representative: Kügele, Bernhard

(57) **Abstract**

A broadcasting transmitter includes object-oriented-category-spaces formed by directory spaces indicating a hierarchical structure, and transmits on-air programs, program service information and hierarchical category information that indicates relations between the programs. A receiver for this transmitter receives the category information in the hierarchical system, and provides audiences with versatile functions such as searching programs, automatic program storage, and controlling stored programs.

## Description

### Field of the Invention

The present invention relates to a broadcasting transmitter that transmits programs being grouped based on categories in a hierarchical system and a receiver that receives the on-air programs. More particularly it relates to a broadcasting transmitter which transmits program service information including on-air schedule and other supplementary information multiplexed on an ordinary program such as video, audio and other applications, and further it multiplexes and transmits category information related to programs in a hierarchical system. The receiver of the present invention stores the category information in the hierarchical system besides the received programs and their service information.

### Background of the Invention

In recent years, digital broadcasting has drawn attention and digital CS broadcasting has been already commercialized in Japan after some trial experiences. Program information transmitting technique is one of key techniques of the digital broadcasting for supplying Electronics Program Guide (EPG) service. This technique multiplexes service information regarding programs and channels on the on-air signals of video and audio programs.

This service information is defined by DVB (Digital Video Broadcasting) standard as SI (service information). The digital CS broadcasting in Japan is operated in accordance with the DVB standard.

The receiver for this transmitter displays the information about channels and on-air schedule of programs on the screen by using the SI, whereby functions benefiting audiences to select programs are realized.

In a conventional broadcasting service, e.g. a TV drama is aired at a fixed time every week, and completed in a plurality of on-airs, and a drama gained popularity from audiences is re-run after a certain period, or a continuation of the drama is produced.

An audience who has a receiver including a recording medium sometimes wants to record a TV drama sequentially every week, and record or watch a re-run of part of the drama which the audience forgot to record.

Further, the audience wants to control the TV drama recorded in sequence to be stored in a secondary storage device, and also the drama is desirably in an entire drama complied in series.

The conventional SI has included independent information on respective on-airs, which has not permitted the audiences to identify a relation to a next part of the drama to be aired next week. When the drama is re-run, its SI does not indicate "re-run". The audiences thus cannot find easily through their receiving terminal that the program has been stored or not.

When a continuation of the drama is aired, the SI does not indicate a particular relation between this program and a specific program previously aired. The audiences thus cannot know with ease that the continuation of some program is aired.

A broadcasting station wants to inform audiences of programs by grouping a plurality of programs from various views of points for organizing better programs. For instance, this grouping is practiced by the station so that recommended programs and a special event program such as Olympic games can be promoted to audiences. The information of grouping programs is an effective tool for the broadcasting station because it can provide audiences with appealing contents, and for the audiences, it is a key tool for classifying, and searching the programs.

The conventional SI, however, has not included this kind of grouping information having various data about a program, the requests discussed above are thus not satisfied yet.

In other words, in the DVB standard discussed above, a genre code named "contents_nibble" can be added to the SI; however, the genre code is provided with a number corresponding to a genre such as sport, drama, news, etc. Therefore, this genre code just classifies programs from a standpoint of a program type or a program category. The genre code thus has not classified programs from angles other than a type-wise angle, or has not classified programs by combining classifications viewed from various standpoints. The conventional genre code thus needs to be improved.

### Summary of the Invention

The present invention has an object to provide a broadcasting transmitter which can produce category information in a hierarchical system for grouping programs responsive to any purposes.

The present invention has another object to provide a broadcasting transmitter which can realize various functions such as program search, automatic program archive, archived programs control, and the like, by using the category information in the hierarchical system.

The present invention still has an object to provide a broadcasting transmitter which can transmit not only the category information about programs but also category information including all related information such as the casts, director, producer of the program, as well as to provide a receiver for this transmitter.

In order to achieve the objects discussed above, the broadcasting transmitter of the present invention transmits the following three items:
(a) programs including audio & video, and various applications;
(b) service information (hereinafter called "SI") including on-air schedule of programs and supplementary information including contents of the programs; and
(c) category information in a hierarchical system.

The category information forms a plurality of domains (hereinafter referred to as a "category space") responsive to respective objects. Each category space comprises a plurality of nodes (hereinafter referred to as a "directory space") indicating a hierarchical structure.

A broadcast station can establish category spaces responsive to objects, form directory spaces in a category space, link a program to a directory space, whereby programs can be grouped in a hierarchical structure.

The receiver of the present invention receives the following three items:
(a) programs including audio & video, and various applications;
(b) service information (hereinafter called "SI") including on-air schedule of programs and supplementary information including contents of the programs; and
(c) category information in a hierarchical system.

The category information forms a plurality of category spaces responsive to respective objects. Each category space comprises a plurality of directory spaces indicating a hierarchical structure.

The receiver can receive an independent category space depending on needs, and record a program automatically or search a program according to the hierarchical system shown in the directory space.

When category information is changed, the broadcasting transmitter of the present invention transmits the updated category information and, at the same time, selective information in which the changed portion by updating is described. The transmitter receives only this selective information, thereby updating the archived category information.

An audience can thus search and classify the archived programs with the latest category information. Having not archived the category information, the audience can obtain the latest category information by using the updated category information.

### Brief Description of the Drawings

Fig. 1 is a block diagram illustrating a structure of a broadcasting transmitter in accordance with an exemplary embodiment of the present invention.
Fig. 2 is a schematic diagram illustrating a concept of program service information.
Fig. 3 shows a layer structure of a category space.
Fig. 4 shows an attribute structure of a directory space.
Fig. 5 shows a data structure of an example of program service information.
Fig. 6 shows a data structure of selective information produced when a category space is updated.
Fig. 7 shows a layer structure of an updated category space.
Fig. 8 is a block diagram of a receiver in accordance with the exemplary embodiment of the present invention.
Fig. 9 shows a data structure of management information of archived programs.
Fig. 10 is a flowchart illustrating flows of operation when a category space is displayed.
Fig. 11 is a flowchart illustrating flows of operation when the category space is updated.
Fig. 12 is a flowchart illustrating flows of operation when a program is automatically recorded by using a category space.
Fig. 13 shows a layer structure assigned to casts appearing in programs.

### Description of the Preferred Embodiment

A broadcasting transmitter and a receiver of the present invention are described hereinafter with reference to the accompanying drawings. In this embodiment, the broadcasting transmitter and the receiver used in digital satellite broadcasting system in accordance with MPEG 2 standard are employed; however, the applicable scope of the present invention is independent of a type of networks and services.

The present invention can be also applicable to e.g. the type of using VBI (vertical blanking interval) in an analog broadcasting system utilizing the ground wave, and a bi-directional transmission or one-way transmission utilizing a CATV network.

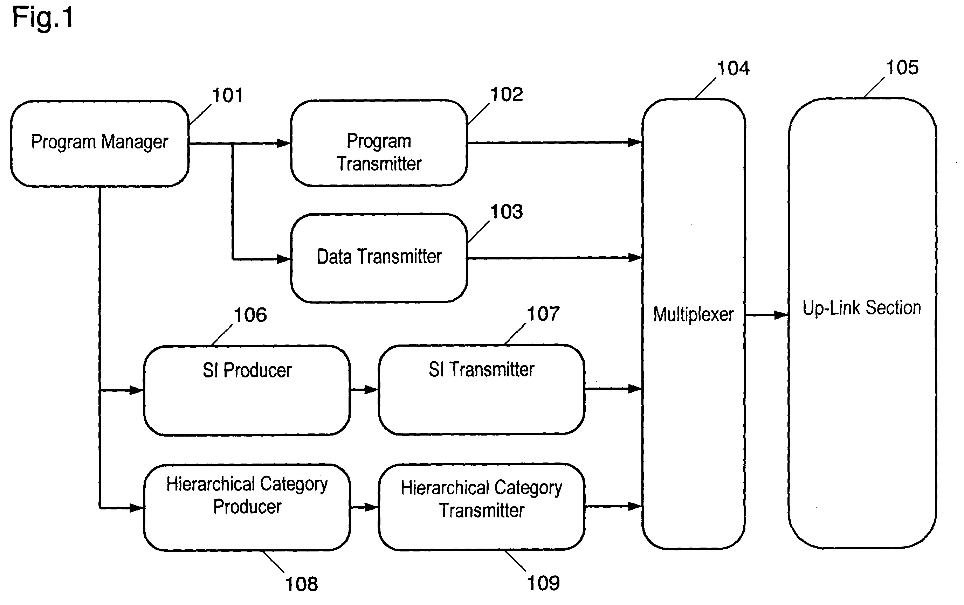

Fig. 1 illustrates a broadcasting transmitter in accordance with the exemplary embodiment in digital satellite broadcasting of the present invention.

In Fig. 1, program manager 101 controls "program management information" such as on-air schedule, program title, data (video, audio or other data forms) storage location.

Manager 101 refers to an on-air schedule and sends a program comprising data (video, audio and other data forms) to program transmitter 102.

Program transmitter 102 encodes the input data and sends them to multiplexer 104.

Program manager 101 refers to the on-air schedule and sends various data including independent data of broadcasting to data transmitter 103.

Data transmitter 103 encodes the input data and sends it to multiplexer 104, which multiplexes a plurality of coded data supplied from program transmitter 102 and data transmitter 103, then sends them to up-link section 105.

Up-link section 105 up-links the input data supplied from multiplexer 104 to a broadcasting satellite and the like.

In digital broadcasting, supplementary information called service information (SI) is transmitted, in general, together with video, audio and data of a program. The SI includes information of a channel, programs on-air schedule of each channel, a program title, a program description and the like.

SI producer 106 receives the program management information necessary for producing the SI from program manager 101, and produces the SI based on the information, then sends the SI to SI transmitter 107.

SI transmitter 107 encodes the SI and sends it to multiplexer 104, which multiplexes coded data supplied from SI transmitter 107 in addition to those supplied from program transmitter 102 and data transmitter 103, then sends them to up-link section 105.

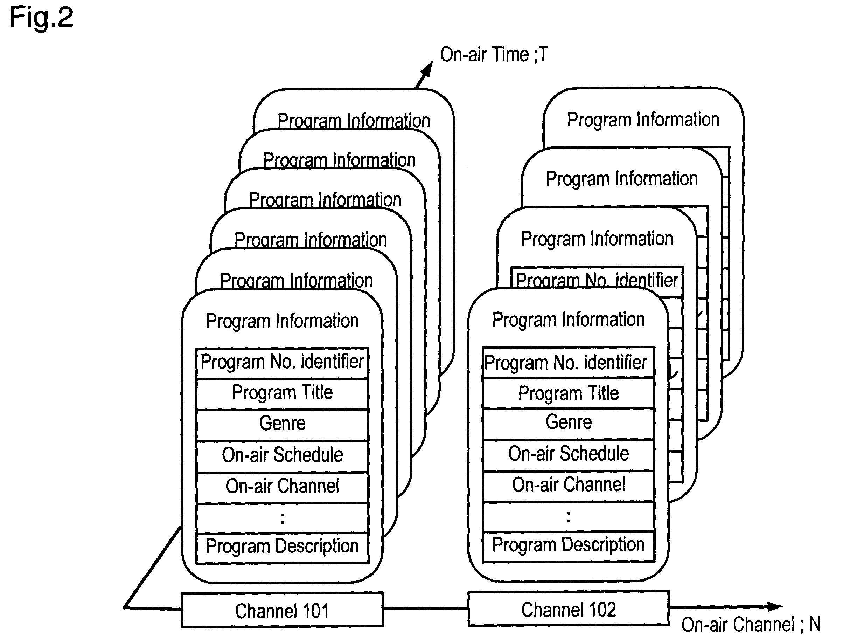

Fig. 2 is a schematic diagram illustrating the SI, which is utilized for controlling programs by on-air channels and on-air times. The SI includes programs on-air schedules of each channel, further it can additionally include program titles and program descriptions.

The program management by channels and on-air times as discussed above, however, cannot fully provide audiences with the programs content intended by the broadcasting station, because programs should be grouped by views from various angles, and such a grouping is desirably reflected to organizing programs. On-air times and on-air channels are only part of attributions for grouping programs.

In the near future, a receiving terminal having a storage medium of large capacity is expected to be widely used, and then a program-watching-style free from on-air time, of selecting a program out of programs stored once in a storage medium, prevails among audiences.

When taking this watching style, the audience has a difficult time for selecting a desirable program by using a conventional program-grouping including only on-air times and on-air channels.

Programs are desirably grouped by a broadcasting station in a versatile and restriction-free manner, and such a grouping should be realized on the storage medium so that the problems discussed above can be solved.

In the broadcasting transmitter shown in Fig. 1, hierarchical category producer 108 is added. Category producer 108 realizes the versatile and restriction-free grouping of programs, for this purpose, it obtains category information set by the station for grouping programs from program manager 101, then puts the information into a hierarchical system, and controls them as hierarchical category information.

Further, hierarchical category producer 108 forms and controls a plurality of category spaces responsive to respective objects. The hierarchical category information and category spaces produced by producer 108 are sent to hierarchical-category-transmitter 109, which encodes the input data from producer 108, and sends the coded data to multiplexer 104.

Multiplexer 104 multiplexes the coded data supplied from transmitter 109 together with the input coded data supplied from program transmitter 102, data transmitter 103 and SI producer 106, then sends the resultant data to up-link section 105.

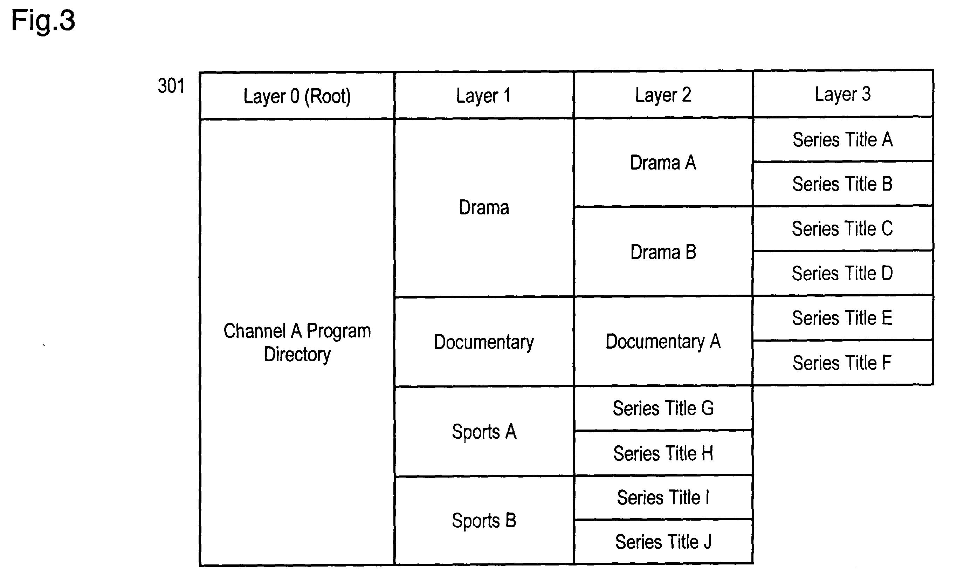

Fig. 3 shows a layer structure of a category space produced by hierarchical category producer 108.

In this example, a program category set by the station and the organizing of programs into a basic unit (hereinafter called "program frame") such as dramas and news are unified into a hierarchical expression. This arrangement allows receivers to obtain program information available only at a transmitter side in the past in addition to the regular program frames already available to receivers. In Fig. 3, layer 3, e.g. "series title A" and "series title B" are program frames. On the other hand, a program is not described in this category space, but it is defined as "series title A, title A1" in the SI. In Fig. 3, a program per se is not defined in a directory space of the category space, and is defined in SI; however, under layer 3 of "series title A", layer 4 is formed and "title A1" can be defined therein.

A plurality of directory spaces are established in a category space, where a root directory space, a top of hierarchical structure, must be always established. In other words, the root directory space is utilized for indicating the information of the category space per se.

In category space 301 shown in Fig. 3, "Channel A Program Directory" is set as the root directory space. Category space 301 includes hierarchical layer 1 with four directory spaces, i.e. drama, documentary, sport A, and sport B. The drama in layer 1 is further separated into hierarchical layer 2, i.e. drama A and drama B, and drama A is still further separated into hierarchical layer 3, i.e. series title A and series title B.

As such, the category space comprises a plurality of hierarchical layers, whereby description of restriction-free can be realized. In this example, the directory space has three layers; however, a number of layers are not limited.

Each directory space has attribution, which can be added in plural numbers.

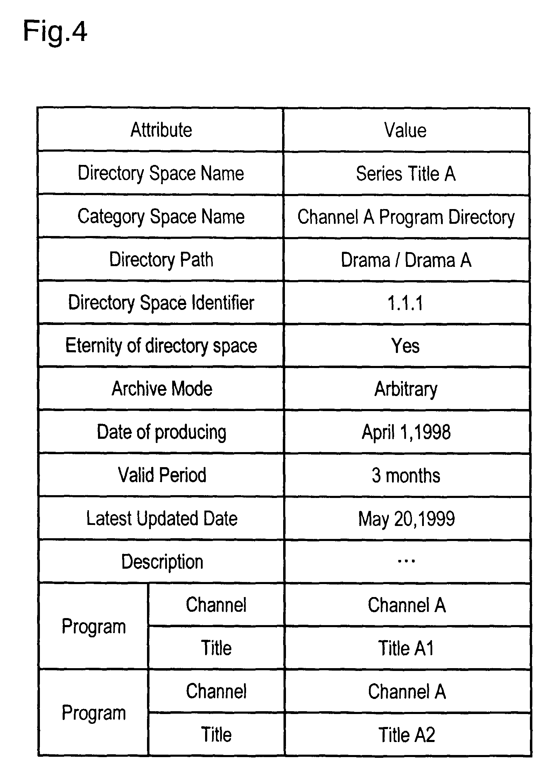

Fig. 4 shows an attribute structure of the directory space named "series title A" of layer 3 belonging to category space 301. A directory space name, one of attribution, represents a name of directory space. Attribution of a category space name represents a name of category to which directory spaces belong, i.e. names of root directory spaces in the category space.

Attribution of a directory path represents a hierarchical structure in a category space.

Fig. 4 shows that "series title A" belongs to directory space named "drama A" which belongs to "drama" in the category space named "Channel A Program Directory".

Attribution of directory-space-identifier is utilized to identify a directory space in a category space. This identifier can be also utilized as same as the attribution of directory path in order to indicate a hierarchical structure.

An identification No. (hereinafter referred to as an "ID. No.") is provided to an upper directory space. Arranging ID. Nos. from the top of hierarchy to down forms a directory-space-identifier. Each ID. No. is separated by " . ".

When the directory space identifier of "series title A" is "1.1.1", it indicates that the directory space identifier of "drama" is "1", and that of "drama A" is "1.1". This can identify a mother-child relation between each directory space.

Attribution of archive mode is a flag indicating compulsory or arbitrary. The flag indicates whether the programs or various information in the directory space are compulsorily archived or not. When this attribute shows arbitrary, the received data are not archived unless the receiver requests to archive them.

Eternity is one of attribution of directory space, and it is a flag indicating whether a directory space can eternally exist with regard to an upper directory space or not. In other words, ID. Nos. are used regularly in eternal directory spaces, on the other hand, used ID Nos. can be re-used in non-eternal directory spaces when the stock of ID Nos. are exhausted.

The example shown in Fig. 4 tells the following possibility. The program frame (directory space) of "series title A" belongs to "drama A", and this relation lasts long. Even after the on-air of "series title A" is ended, this "series title A" can exist under the directory space of "drama A" as long as the directory space of "drama A" exists.

Date of producing a directory space is another attribution. A valid period is also one of attribution, and it indicates a valid period of a directory space from the data of space production.

The latest updated date is also one of attribution, and it indicates the latest date of updating a directory space. In Fig. 4, the data of producing a directory space, a valid period and the latest updated date are described in a unit of "day". However, they can be described in other time unit including "second", or described in time-zone, e.g. GMT (global management time) to accommodate a plurality of nationwide standard times.

Description is also one of attribution, and it indicates information supplementary to a directory space. Further, program attribution is available in order to indicates a relation between a directory space and a program. This attribution can be added in plural numbers. In Fig. 4, two program attributions are described, and the two indicate that "title A1" and "title A2" are included in the program frame of "series title A".

As such, link-information to a program is described as information for a directory space, whereby the directory space can be related to the program, namely, the directory space to which the program belongs can be assigned. A directory space can be also related to a program by describing the information linking to a directory-space into SI.

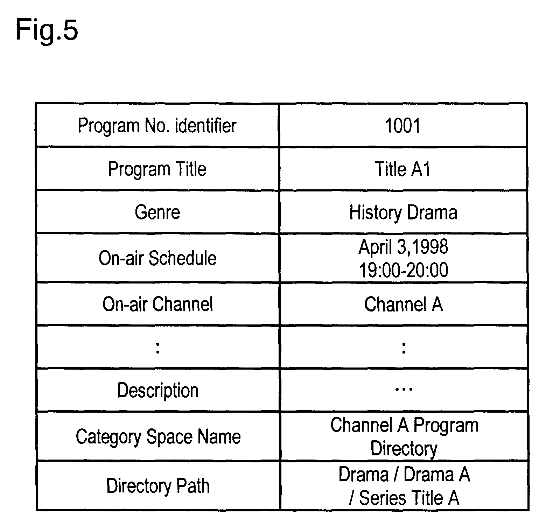

Fig. 5 shows a data structure of SI of the program named "title A1". This program links to "series title A" in "Channel A Program Directory" by using the category space name and directory path. As such, in a directory space, there are two ways to describe link information: (1) Describing information linking to SI corresponding to a program, (2) Describing information linking to a directory space in SI corresponding to a program. Both ways are available in a broadcasting transmitter, and either one can be utilized depending on the situation.

In this embodiment, link information to a program is described by using a channel name and a program title, and that to a category space is described by using a category space name and a directory path. However, respective identifiers can be used, or other methods can do the same job.

In a root directory space, attributions discussed above are valid, and in this case, they belong to a category space.

Details of a category space are updated responsive to organizing programs and other situations. Hierarchical category producer 108 can produce the updated details as a selective portion changed from the previous category space before updated.

Several patterns are available in the process of updating the category space. For instance, in the case of the example shown in Fig. 3, the program frame of "series title A" in layer 3 needs not anymore transmission when on-air of the program is ended. The description of "series title A" is may be deleted from the category space when the on-air is ended, or the description of "series title A" may be maintained after the on-air is ended in order to respond to a possibility that the program is archived in a storage device.

On the other hand, when an error message is aired in a news program, the directory space should be deleted. For instance, when "series title E" in layer 3 shown in Fig. 3 has an error, "series title E" is deleted, and "documentary A" in layer 3 thus only may have "series title F" in the lower layer 3.

Depending on organizing programs and changing a category space, "series title B" in layer 3 can be moved to another layer under layer 2, or a new "title L" directory can be added under "documentary A" in layer 2.

The attribution of directory space including a name of directory space can be changed.

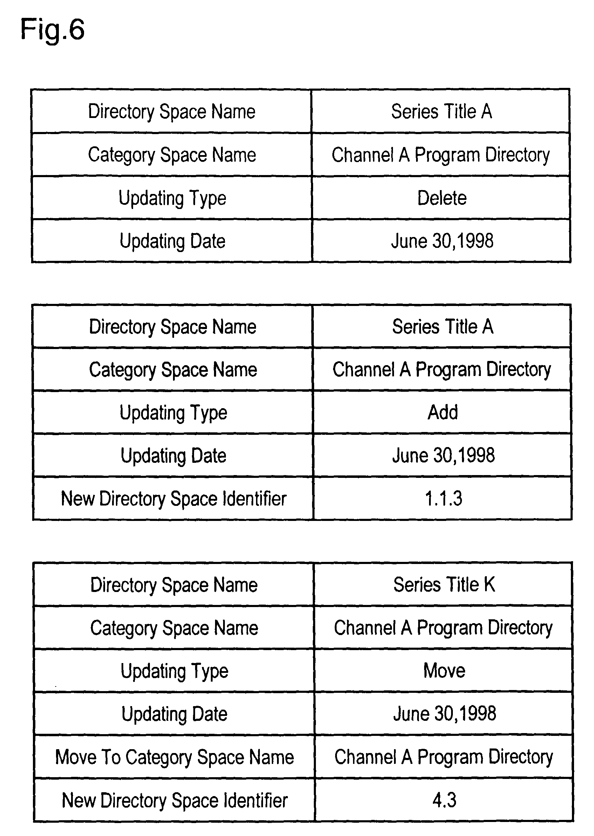

Fig. 6 shows a data structure of a selective information for updating the category space in Fig. 3 archived in a receiver. Fig. 6 indicates the following three changes in the category space shown in Fig. 3:
(1) Deleting "series title A" in layer 3;
(2) Adding "series title KK" under "drama A" in layer 2; and
(3) Moving "sport A" in layer 1 under "sport" in layer 1.

The following is a discussion about the updated details indicated by the selective information that has the data structure illustrated in Fig. 6

Section 601 indicates that "series title A" is deleted from "Channel A Program Directory" on June 30, 1998. This omits the description of "series title A" from the transmission details, but this does not mean that "series title A" per se is deleted under "drama A". If the relation between "drama A" and "series title A" should be deleted, eternity of directory space, one of attributions of directory space, should be set at "no eternity".

In other words, "deletion from a category space" is "halt transmission", and "deletion from a directory space" is "deletion from management information in the storage device". A program thus cannot be searched in the storage device by using the directory space.

Section 602 of Fig. 6 indicates that a new directory space "title K" is produced under "drama A" in "Channel A Program Directory" on June 30, 1998. In this case, the new directory-space-identifier tells that an ID. No. (in this case, No. 3) different from those of existing "series title A" and "series title B" is assigned to "title K" under "drama A".

Section 603 indicates that the directory space "sport A" belonging to "Channel A Program Directory" moves under "sport". When the directory space moves, a new directory-space-identifier is assigned, this is the same procedure as when a new space is added. In this case, ID. No. 3 is assigned to the moved space as a space under "sport".

As one of the updating types, "attribution change" can be described, which is not shown in this embodiment though. This is utilized, e.g. when "series title A" is changed to "series title M".

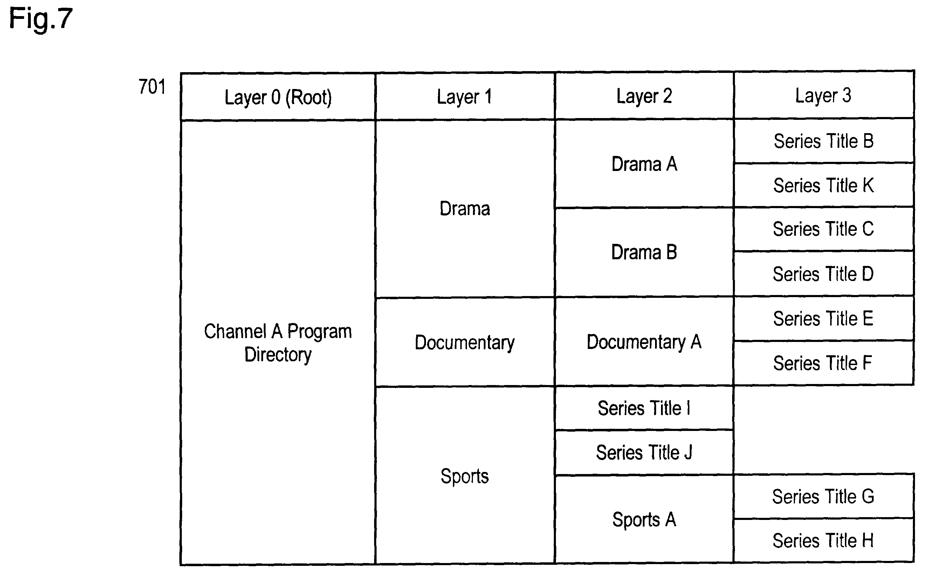

Fig. 7 shows a layer structure of an updated category space which contained the updating shown in Fig. 6 with regard to the category space shown in Fig. 3.

A process follows the selective information shown in Fig. 6, and thus "series title A" of the category space in Fig. 3 is deleted, "title K" is added and "sport A" is moved.

The broadcasting transmitter of the present invention as discussed above provides the following advantages:
1. The transmitter forms category information with a plurality of category spaces responsive to respective objects, thereby grouping the programs into various types with ease.
2. The transmitter forms independent category spaces by directory spaces in a hierarchical structure, whereby the groups of programs can be understood with ease.
3. The transmitter provides category spaces and their directory spaces with respective identifiers, thereby searching directory spaces with ease.
4. The transmitter varies a length of identifier of the directory space responsive to a depth of hierarchical structure, whereby a directory space can be formed with ease whatever the hierarchical structure is.
5. The transmitter transmits updated category information and, at the same time, selective information including a changed portion, whereby category information can be controlled with ease.
6. The transmitter can describe the information to be linked to category information into the information supplementary to a program in SI, whereby a category to which a program belongs can be described.
7. The transmitter can include the identifiers of category space and directory space in the information linking to the category information, or can describe the information linking to a program into the category information, whereby the program belonging to the category can be described.

The broadcasting transmitter in accordance with this exemplary embodiment is so structured that it transmits hierarchical information and SI independently. In this case, a data structure of SI can be expanded so that the hierarchical information can be included therein. However, since the hierarchical category information indicates category spaces, it may sometimes include a lot of information. The independent transmission of these two types of information thus can benefit the transmitter to select changes in SI, reproduce data quickly and transmit it when some data in SI are changed. Further, when both of SI and hierarchical category information are incurred with changes, the transmitter can change and transmit the SI first promptly to notify audiences of the changes. Then, the transmitter changes and transmits the hierarchical category information to notify the audiences of details of the changes.

The audiences receive the changes step by step, which avoids possible confusion due to receipt of many changes at one time.

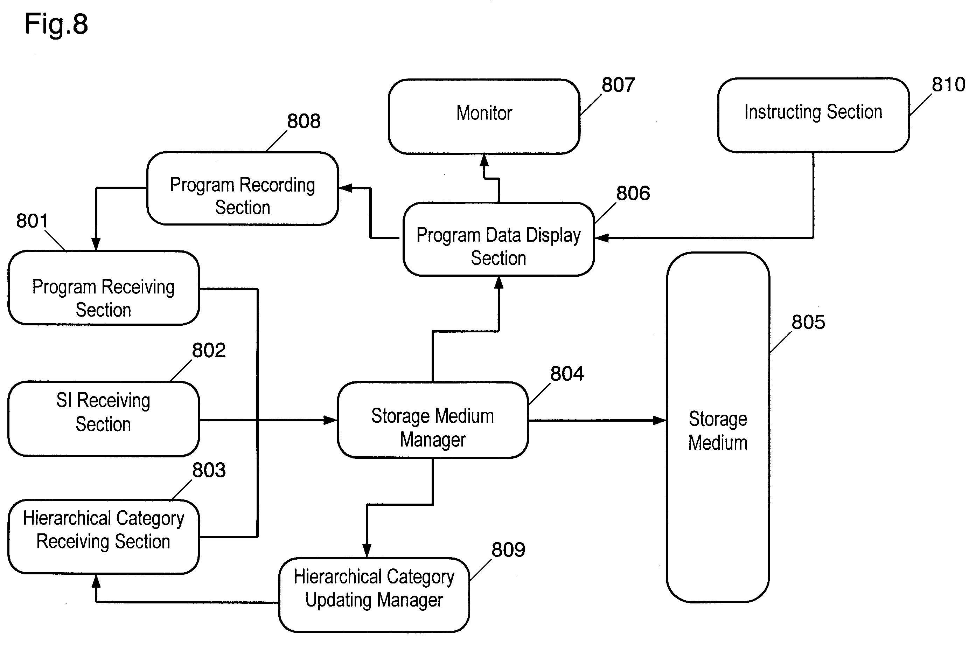

Fig. 8 is a block diagram illustrating an embodiment of the receiver of the present invention in digital satellite broadcasting. Fig. 8 particularly focuses on a section involved in processing program information.

The receiver in Fig. 8 comprises storage medium 805 and program receiving section 801.

Storage medium 805 can arbitrarily archive and control programs and their information.

Program receiving section 801 receives a program transmitted by the broadcasting transmitter shown in Fig. 1, and controls the program.

As already discussed previously, the broadcasting transmitter shown in Fig. 1 multiplexes coded data supplied from program transmitter 102, data transmitter 103, SI transmitter 107 and hierarchical category transmitter 109 in multiplexer 104, then transmits the multiplexed data.

In Fig. 8, program receiving section 801 receives coded data produced by program transmitter 102, the coded data is separated from the coded data multiplexed and transmitted from the broadcasting transmitter. Receiving section 801 decodes the coded data, and controls the decoded program.

When receiving section 801 archives the received program, the decoded program is sent to storage manager 804 from receiving section 801. Storage manager 804 archives and controls the received program in storage medium 805. Receiving section 801 can output video and the like to monitor 807, though this is not illustrated in Fig. 8.

SI receiving section 802 receives coded data produced by SI transmitter 107, the coded data is separated from the coded data multiplexed and transmitted from the broadcasting transmitter. Receiving section 802 decodes the coded data, and controls the decoded SI.

In the same way, hierarchical-category-receiving-section 803 receives coded data produced by category transmitter 108, the coded data is separated from the coded data multiplexed and transmitted from the broadcasting transmitter. Receiving section 803 decodes the coded data, and controls the decoded hierarchical category information and category spaces.

Instead of obtaining category spaces by decoding the received coded data as discussed above, the category spaces can be reproduced from the hierarchical category information.

The category space comprises a plurality of directory spaces including root directory spaces, which was discussed in the description of the broadcasting transmission.

The SI, hierarchical category information, category spaces and directory spaces are supplied from storage manager 804 controls to storage medium 805 for storing. Storage manager 804 respective information archived in storage medium 805. Storage medium 805 can be available in a plurality of numbers and regardless of types such as memory, disc including DVD-RAM (rewritable anytime, such as a digital video disc), and a type-mixing is also possible.

Program data display section 806 displays program data such as EPG on monitor 807 by using SI and hierarchical category information.

Instructing section 810 receives instructions from an audience, e.g. through a remote controller. The audience regularly instructs which functions provided on the screen, e.g. EPG, is to be selected or operated. The instruction received at section 810 is sent to program data display section 806 for processing.

When the instruction is "recording a program at a preset time", instructing section 810 sends the instruction to program recording section 808 via display section 806. Program recording section 808 presets a time to receive the program.

Program recording section 808 controls a timer and instructs program receiving section 810 to receive the program when the on-air time comes.

Hierarchical-category-updating-manager 809 controls the updating of the category spaces, and instructs hierarchical-category-receiving-section 803 to receive the latest category space.

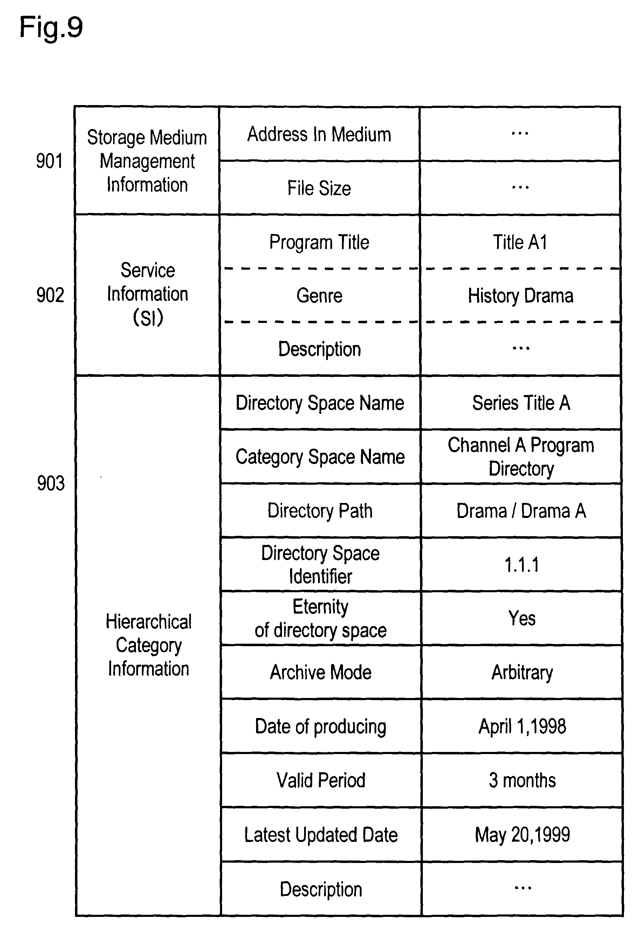

Fig. 9 shows a data structure of the management information of archived program in storage manager 804. In the example shown in Fig. 9, storage medium management information 901 controls the actual state of the program archived in the storage medium. SI manager 902 and hierarchical category information 903 control the SI and hierarchical category information.

As previously described, link information is available for relating a program to hierarchical category information. By using this link information, a category space to which a program belongs can be archived. By using these archived SI and category spaces, a program description or information of a program frame (in this case, "series title A") can be displayed.

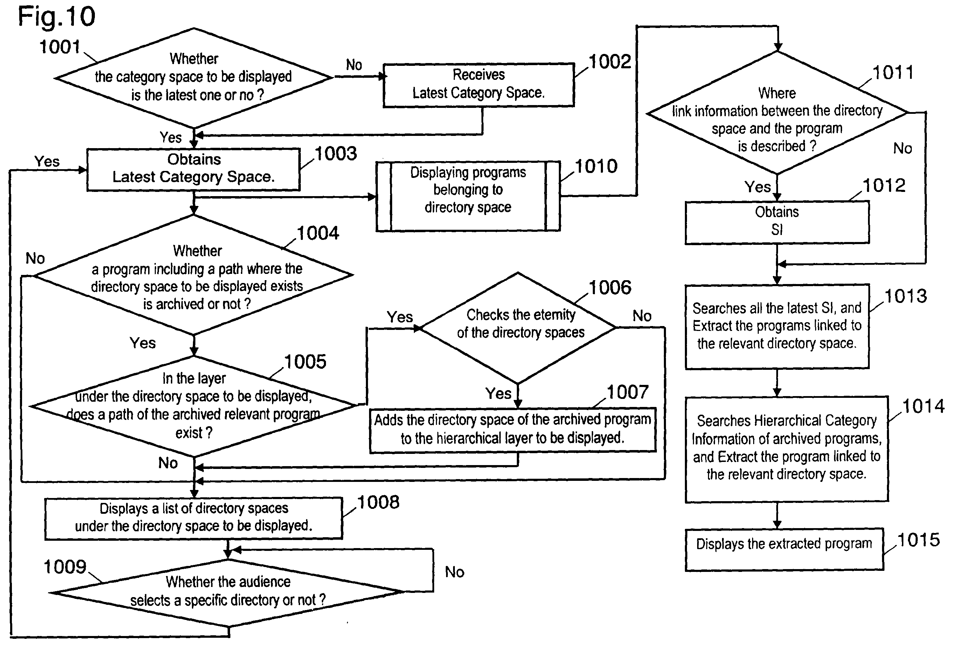

Fig. 10 is a flowchart illustrating a process by the broadcasting transmitter when a category space is displayed.

When a directory space in a category space is displayed, the broadcasting transmitter, first, searches and obtains both of archived programs and category information, and links them to respective directory spaces, then displays them.

For instance, a program belonging to "series title A" shown in Fig. 3 is archived, and category space 701 shown in Fig. 7 is going to be displayed. At this time, when a directory space under "drama A" is displayed, the process follows the procedure shown in Fig. 10. When three directory spaces, namely, "series title A", "series title B" and "series title K" are displayed, the process is done as follows:
1. An audience instructs program-display-section 806 to display its directory space through instructing section 810.
2. Program display section 806 checks storage manager 804 whether the latest information of the category space to be displayed is archived or not.
3. Storage manager 804 checks hierarchical category updating manager 809 whether the category space to be displayed is the latest one or not (Step 1001).
4. If not the latest space, hierarchical-category-updating-manager 809 requires hierarchical category receiving section 803 to receive the latest category space.
5. Hierarchical category receiving section 803 receives the requested latest category space, and sends it to storage manager 804.
6. Storage manager 804 archives the received data into storage medium 805 (Step 1002).
7. If receiving section 803 cannot obtain the latest category space, storage manager 804 notifies program display 806 of the fact, then obtains the latest directory space (Step 1003). In the case of the example shown in Fig. 7, "series title B" and "series title K" are the latest; however, "series title A" has been deleted.
8. Program display section 806 inquires storage manager 804 whether a program including a path where the directory space to be displayed exists is archived in storage medium 805 or not (Step 1004). If not, go to Step 1008.
9. Program display section 806 inquires storage manager 804 of the following matter: among the programs archived in storage medium 805, and in the directory space in a layer under the directory space to be displayed, does a path of the archived relevant program exist (Step 1005)?
10. If a program belonging to "series A" exists in the archived programs, program display section 806 checks the eternity of the directory spaces related to "series title A" (Step 1006).
11. In the example shown in Fig. 4, the eternity is confirmed, and then program-display-section 806 adds the directory space of the archived program (in this case, "series title A") to the hierarchical layer to be displayed (Step 1007).
12. Program display section 806 displays a list of directory spaces under the directory space to be displayed on monitor 807 (Step 1008).
13. Program display section 806 inquires the displayed directory space whether the audience selects a specific directory or not. If not, this inquiry is repeated (Step 1009).

The receiver, on the other hand, practices the process on Step 1003 when an audience selects through instructing section 810, a specific directory from the directories displayed on monitor 807. When a function of displaying programs belonging to respective directory spaces is added to the receiver, a process of displaying programs belonging to directory spaces is practiced (Step 1010) between Steps 1003 and 1004.

In this process on Step 1010, program display section 806 firstly inquires storage manager 804 whether the latest directory space is linked to the program or not. Then the processes below follow Step 1010:
1. Storage manager 804 checks a value of attribution where link information between the directory space and the program is described (Step 1011).
2. If the link is available, program display 806 requires storage manager 804 to provide the SI.
3. Storage manager 804 refers to storage medium 805, and sends the obtained SI to program display section 806 (Step 1012).
4. Program display section 806 requires manager 804 to search all the latest SI, and extract the programs linked to the relevant directory spaces (Step 1013).
5. Storage manager 804 searches all the latest SI archived in storage medium 805, and extracts the programs linked to the relevant directory space.
6. If storage medium 805 is not ensured for storing the latest SI, storage manager 804 requires SI-receiving-section 802 to receive the latest SI.
7. Further, program display section 806 inquires storage manager 804 whether it searches hierarchical category information of archived programs or not, and whether it stores the program linked to the relevant directory space or not.
8. Storage manager 804 checks whether it stores what is inquired by display section 806 (Step 1014).
9. If it stores the inquired program, program display section 806 displays the program together with the program already extracted on monitor 807 (Step 1015). At this time, the display of "program stored" or "program not stored" provides the audience with better understanding.

The process discussed above allows the receiver to display a hierarchical structure of the category space to the audience in an interactive manner, and at the same time, to display both of programs to be aired and archived programs already aired on the same display.

The receiver can save the storage medium to archive substances of programs because the storage of only SI and hierarchical category information allows the audiences to notice that the program was already aired. This method provides the audiences with greater convenience.

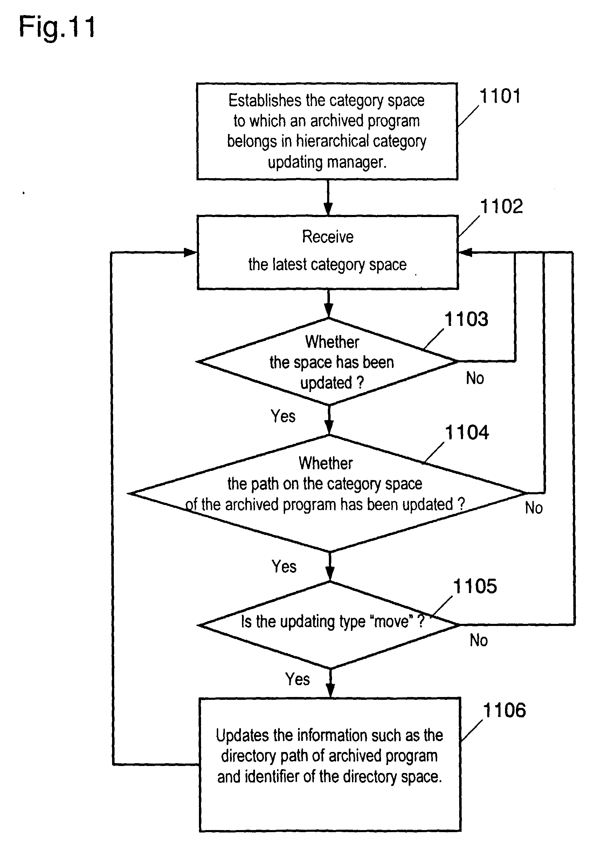

Fig. 11 is a flowchart illustrating a process of the receiving terminal when a category space is updated. In this example, the category space to which archived program belongs is updated every time. When it is updated, selective information thereof is transmitted to the receiver. The receiver thus always checks the selective information.

In this case, a process of moving a directory space is described. The process of adding a directory space, and that of deleting a directory space having no eternity can be also realized in the same manner. The process of deleting a directory space having eternity was already described in Fig. 10.

A process of updating a category space is described hereinafter with reference to Fig. 11.
1. The receiver establishes the category space to which an archived program belongs in hierarchical category updating manager 809 (Step 1101).
2. Hierarchical category updating manager 809 requires the hierarchical category receiving section to receive the latest category space, and to check whether the space has been updated (Step 1102).
3. Hierarchical category updating manager 809 then checks the experience of updating in the received space. If no updating has been done, manager 809 requires hierarchical-category-receiving-section 803 to obtain the latest information again (Step 1103).
4. If an updating has been done, hierarchical category updating manager 809 determines whether the path on the category space of the archived program has been updated. If the path was not updated, hierarchical category updating manager 809 requires receiving section 803 to obtain the latest information (Step 1104). If the path has been updated, hierarchical-category-updating-manager 809 checks whether the updating type is "move" or another type (Step 1105).
5. In the case of "move" updating type, hierarchical category updating manager 809 updates the information such as the directory path of archived program and identifier of the directory space (Step 1106).

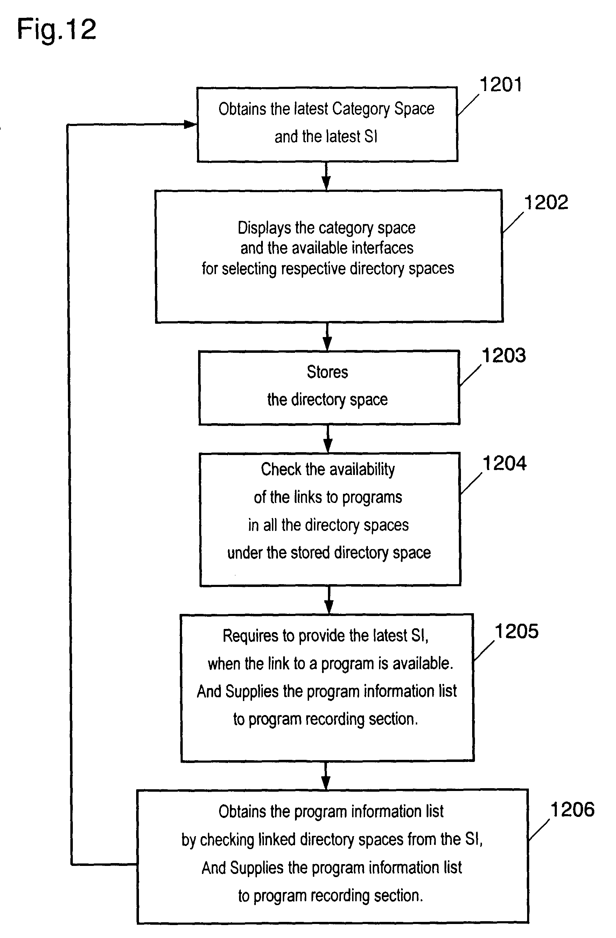

Fig. 12 is a flowchart illustrating a process of recording automatically a program belonging to a space under arbitrary directory space by using the category space in the receiver. Fig. 12 describes the process up to presetting a time for recording a program.

The practice of recording a program was already described in program recording section 808, program receiving section 801, storage manager 804, storage medium 805 and the like.

In order to automatically record a program belonging to a space under an arbitrary directory space, the following process should be taken:
1. Program display section 806 requires storage manager 804 to obtain both of the latest category space and SI.
2. Storage manager 804 demands hierarchical-category-updating-manager 809 to require hierarchical-category-receiving-section 803 to obtain both of the latest category space and SI.
3. When the process of automatic recording starts, hierarchical category receiving section 803 obtains the latest information and sends it to storage manager 804.
4. Storage manager 804 archives the latest data just received into storage medium 805 (Step 1201).
5. Program display section 806 obtains the latest information from storage manager 804, and displays the category space on monitor 807. At the same time, section 806 displays available interfaces for selecting respective directory spaces (Step 1202).
6. The audience utilizes one of the interfaces displayed on monitor 807, and selects a directory space through instructing section 810, which then sends the selected directory space to program display section 806. Section 806 stores the directory space (Step 1203).
7. Program display section 806 inquires storage manager 804 whether all the directory spaces under the stored directory space are linked to programs or not.
8. Storage manager 804 refers to storage medium 805 to check the availability of the links to programs, and sends the result to display section 806 (Step 1204).
9. Program display section 806 checks the information sent from storage manager 804, and requires the manager 804 to provide the latest SI when the link to a program is available. If the link is not available, the process is ended.
10. Storage manager 804 checks storage medium 805, and obtains program information.
11. Manager 804 returns the list of the obtained program information to display section 806.
12. Display section 806 supplies the program information list to program recording section 808 (Step 1205).
13. Display section 806 requires storage manager 804 to provide the latest SI.
14. Manager 804 searches storage medium 805 for the latest SI, and sends program information obtained from the latest SI to program display section 806.
15. Display section 806 supplies the program information to program recording section 808 (Step 1206).
   On Step 1205, the linked program is obtained from a directory space, and on Step 1206, the program list is obtained by checking linked directory spaces from the SI.
16. Program recording section 808 instructs program receiving section 801 to receive the program when the preset time comes.
17. Information of category space of the program can be varied at anytime, thus after presetting a time for receiving a program (Step 1206), a recheck whether any changes in the category space or SI happen is practiced (Step 1201).

In this example, an audience selects all the directory spaces; however, the audience may select a specific directory space only. The audience also selects a directory space through an interactive user interface; however, an agent or the like may automatically extract a favorable space for the audience.

Further in this example, a process of automatic recording of a program is described; however, a program search can be practiced in the same manner through replacing a portion of "program recording at a preset time" with "displaying a program title".

The receiver also can provide audiences with a favorable program or a recommended program by the process discussed above.

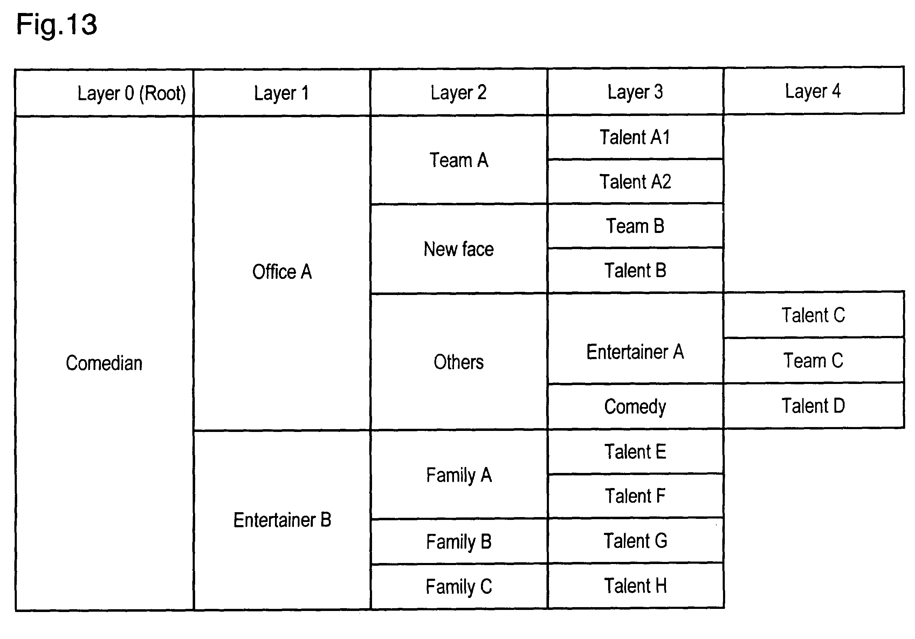

Fig. 13 shows a layer structure when the category space are assigned to casts appearing in programs. For instance, assume that an audience presets a time to receive the program where a new talent of agency A appears. Then the receiver follows the process shown in the flowchart in Fig. 12, and presets a time to receive this program. In this case, the programs included in all the directory spaces under "new talent", i.e. all the program where team B and talent B appear can be programmed to receive at preset times.

Further, another example is shown. Layer 0 (zero), i.e. a root directory, is assigned to be "variety show program" from a view of program genre, a category space covering "variety show programs" is created. Layer 1 and onward, directory spaces can be established from a view of casts in the same manner as the example shown in Fig. 13. In other words, the category space can be established not only from a program view of point, but also from all aspects of the program, such as appearing casts, director, producer and the like. The category space comprises directory spaces established free from fixed view of angles, but from plurality views of angles.

The receiver in accordance with the exemplary embodiment discussed above provides the following advantages:
1. The receiver archives the SI and category information besides the program, thereby grouping the programs not only at receipt of the programs but also anytime after the receipt.
2. The receiver monitors the updating of the archived category information, and reflects the updated details to the archived category information, whereby the latest category information can be always archived.
3. The receiver has an interactive interface responsive to a hierarchical structure of the category space, and searches programs belonging to respective directory spaces by using the SI, then displays thus obtained programs, thereby searching the groups of programs with ease.
4. The receiver has an interactive interface responsive to a hierarchical structure of the category space, and searches archived programs belonging to respective directory spaces, and displays thus obtained programs, thereby searching groups of programs archived in a storage device with ease.
5. The receiver displays both of programs to be aired and programs already archived on the same display based on the category information now being aired, whereby a plan of receiving programs can be drawn up with ease.
6. The receiver automatically records the program belonging to a selected directory space, whereby a program can be recorded with ease.
7. The receiver provides an audience with selectable user-interfaces for selecting any directory space of a category space, so that a program belonging to the directory space selected by the audience can be automatically recorded, whereby a program can be selected and recorded with ease.

## Claims

1. A broadcasting transmitter comprising a category information transmitter, wherein said category information transmitter transmits category information indicating a hierarchical relation between attributions of on-air programs.

2. The broadcasting transmitter as defined in Claim 1 further comprising at least one of:
(a) a program service information (SI) transmitter for transmitting SI including program No. identifier for identifying a program and information having on-air time of the program identified with the identifier; and
(b) a program transmitter for transmitting a program having at least one of video information and audio information.

3. A broadcasting transmitter comprising a category space transmitter, wherein said category space transmitter transmits a category space including a group of program attributions in a hierarchical system including category information comprising not less than two program attributions and at least one piece of information indicating a hierarchical relation between attributions of programs.

4. The broadcasting transmitter as defined in Claim 3 further comprising at least one of:
(a) a program service information (SI) transmitter for transmitting SI including program No. identifier for identifying a program and information having on-air time of the program identified with the identifier; and
(b) a program transmitter for transmitting a program having at least one of video information and audio information.

5. A broadcasting transmitter comprising a directory space transmitter, wherein said directory space transmitter transmits a directory space including a group of data related to attributions of a program in a lowest level of a category space that comprises a group of program attributions in a hierarchical system comprising not less than two program attributions and at least one piece of information indicating a hierarchical relation between attributions of programs.

6. The broadcasting transmitter as defined in Claim 5 further comprising at least one of:
(a) a category space transmitter for transmitting a category space including a group of program attributions in a hierarchical system comprising not less than two program attributions and at least one piece of category information;
(b) a program service information (SI) transmitter for transmitting SI including program No. identifier for identifying a program and information having on-air time of the program identified with the identifier; and
(c) a program transmitter for transmitting a program having at least one of video information and audio information.

7. The broadcasting transmitter as defined in Claim 5 or Claim 6 wherein said directory space includes a storage mode attribution indicating whether an on-air program corresponding said directory space is stored.

8. The broadcasting transmitter as defined in Claim 5 or Claim 6 wherein said directory space includes directory-space-eternity-attribution indicating whether said directory space exists eternally.

9. The broadcasting transmitter as defined in Claim 5 or Claim 6 wherein said directory space includes a production-date-attribution indicating a date when said directory space is produced.

10. The broadcasting transmitter as defined in Claim 5 or Claim 6 wherein said directory space includes a valid-period-attribution indicating how long said directory space is valid.

11. The broadcasting transmitter as defined in Claim 5 or Claim 6 wherein said directory space includes a latest-updating-date-attribution indicating when said directory space is updated most recently.

12. The broadcasting transmitter as defined in Claim 5 or Claim 6 wherein one of said category space and said directory space is provided with one of a variable length identifier and a fixed length identifier for identifying said category space and said directory space.

13. The broadcasting transmitter as defined in Claim 12 wherein hierarchical information of said directory space in said category space is indicated by the variable length identifier for identifying said directory space.

14. The broadcasting transmitter as defined in Claim 13 wherein a length of the identifier for identifying said directory space indicates a depth of a hierarchical structure.

15. The broadcasting transmitter as defined in Claim 7 wherein said transmitter transmits at least selective information including a portion changed by updating the category information.

16. The broadcasting transmitter as defined in Claim 8 wherein said transmitter transmits at least selective information including a portion changed by updating the category information.

17. The broadcasting transmitter as defined in Claim 9 wherein said transmitter transmits at least selective information including a portion changed by the category information.

18. The broadcasting transmitter as defined in Claim 10 wherein said transmitter transmits at least selective information including a portion changed by updating the category information.

19. The broadcasting transmitter as defined in Claim 3 further comprising a program service information (SI) transmitter for transmitting SI including program No. identifier for identifying a program and information having on-air time of the program identified with the identifier, wherein said SI transmitter includes link information to a directory space including a group of data related to a program attribution on a lowest level in the category space being a group of program attributions in a hierarchical system comprising not less than two program attributions and at least one category information.

20. The broadcasting transmitter as defined in Claim 5 or Claim 6 wherein said directory space has link information to program service information (SI).

21. The broadcasting transmitter as defined in one of claims of Claim 1 through Claim 6 wherein said category information has a child attributive identifier for identifying a lower attribution of the program.

22. The broadcasting transmitter as defined in one of claims of Claim 1 through Claim 6 wherein said category information has a parent attributive identifier for identifying an upper attribution of the program.

23. The broadcasting transmitter as defined in one of claims of Claim 1 through Claim 6 wherein the category information has both of a child attributive identifier and a parent attributive identifier.

24. A receiver comprising a category information receiving section for receiving category information indicating a hierarchical relation between program attributions.

25. The receiver as defined in Claim 24 further comprising at least one of:
an SI receiving section for receiving SI including program No. identifier for identifying a program and information having on-air time of the program identified with the identifier; and
a program receiving section for receiving a program having at least one of video information and audio information.

26. A receiver comprising a category space receiving section for receiving a category space including a group of program attributions in a hierarchical system including category information comprising not less than two program attributions and at least one piece of information indicating a hierarchical relation between attributions of programs.

27. The receiver as defined in Claim 26 further comprising at least one of:
(a) a program service information (SI) receiving section for receiving SI including program No. identifier for identifying a program and information having on-air time of the program identified with the identifier; and
(b) a program receiving section for receiving a program having at least one of video information and audio information.

28. A receiver comprising a directory space receiving section for receiving a directory space including a group of data related to attributions of a program in a lowest level of a category space being a group of program attributions in a hierarchical system comprising not less than two program attributions and at least one piece of information indicating a hierarchical relation between attributions of programs.

29. The receiver as defined in Claim 28 further comprising at least one of:
(a) a category space receiving section for receiving a category space including a group of program attributions in a hierarchical system comprising not less than two program attributions and at least one piece of category information;
(b) a program service information (SI) receiving section for receiving SI including program No. identifier for identifying a program and information having on-air time of the program identified with the identifier; and
(c) a program receiving section for receiving a program having at least one of video information and audio information.

30. The transmitter as defined in Claim 28 or 29 wherein said directory space includes a storage mode attribution that is a data indicating whether an on-air program corresponding said directory space is stored.

31. The transmitter as defined in Claim 28 or 29 wherein said directory space includes directory-space-eternity-attribution indicating whether said directory space exists eternally.

32. The transmitter as defined in Claim 28 or 29 wherein said directory space includes a production-date-attribution indicating a date when said directory space is produced.

33. The transmitter as defined in Claim 28 or 29 wherein said directory space includes a valid-period-attribution indicating how long said directory space is valid.

34. The transmitter as defined in Claim 28 or 29 wherein said directory space includes a latest-updating-date-attribution indicating when said directory space is updated most recently.

35. The receiver as defined in Claim 26 further comprising a program service information (SI) receiving section for receiving SI including program No. identifier for identifying a program and information having on-air time of the program identified with the identifier, wherein said SI receiving section includes link information to a directory space including a group of data related a program attribution on a lowest level in the category space being a group of program attributions in a hierarchical system comprising not less than two program attributions and at least one category information.

36. The transmitter as defined in Claim 28 or 29 wherein said directory space includes link information to program service information (SI).

37. The receiver as defined in one of claims of Claim 24 through Claim 29 wherein said category information has a child attributive identifier for identifying a lower attribute of the program.

38. The receiver as defined in one of claims of Claim 24 through 29 wherein said category information has a parent attributive identifier for identifying an upper attribute of the program.

39. The receiver as defined in one of claims of Claim 24 through 29 wherein the category information has both of a child attributive identifier and a parent attributive identifier.

40. The receiver as defined in Claim 24 further comprising:
(a) a program service information (SI) receiving section for receiving SI including program No. identifier for identifying a program and information having on-air time of the program identified with the identifier;
(b) an input section for inputting a keyword for searching a program;
(c) a program searching section for searching an identifier of a program No. by using the keyword supplied from said input section; and
(d) a display section for displaying program information including the identifier of the program No. searched by said program searching section.

41. The receiver as defined in Claim 26 further comprising:
(a) a program service information (SI) receiving section for receiving SI including program No. identifier for identifying a program and information having on-air time of the program identified with the identifier;
(b) an input section for inputting a keyword for searching a program;
(c) a program searching section for searching an identifier of a program No. by using the keyword supplied from said input section; and
(d) a display section for displaying program information including the identifier of the program No. searched by said program searching section.

42. The receiver as defined in Claim 28 further comprising:
(a) a program service information (SI) receiving section for receiving SI including program No. identifier for identifying a program and information having on-air time of the program identified with the identifier;
(b) an input section for inputting a keyword for searching a program;
(c) a program searching section for searching an identifier of a program No. by using the keyword supplied from said input section; and
(d) a display section for displaying program information including the identifier of the program No. searched by said program searching section.

43. The receiver as defined in one of claims of Claim 40 through Claim 42 wherein said keyword for searching a program is at least one of the program title, genre information of the program and casts information of the program.

44. The receiver as defined in Claim 28 further comprising:
(a) a program receiving section for receiving a program;
(b) a program selecting section for selecting a program belonging to the directory space; and
(c) a program recorder for recording the program selected by said program selecting section.

45. The receiver as defined in Claim 29 further comprising a storage medium for archiving at least one of the category space, the directory space, the SI and the program.

46. The receiver as defined in Claim 28 or Claim 29 wherein said receiver receives selective information of category information, and reflects said selective information to archived category information.

47. The receiver as defined in Claim 28 or Claim 29 further comprising a category information display section for displaying hierarchically one of the directory space and program information of an on-air program by using the category information.

48. The receiver as defined in one of claims of Claim 24 through Claim 29 wherein said receiver displays an interactive user interface responsive to a hierarchical structure in the category space.

49. The receiver as defined in Claim 44 or Claim 45 wherein said receiver displays both of a program to be aired and a program already archived on a same display.
